# EUROPÄISCHE PATENTSCHRIFT

(11) **EP 3 508 266 B1**
(45) Veröffentlichungstag und Bekanntmachung des Hinweises auf die Patenterteilung: **23.09.2020**
(21) Anmeldenummer: 18213460.1
(22) Anmeldetag: 18.12.2018
(51) Int. Cl.: B01D 46/00, B01D 46/24, B01D 46/42, E21F 5/20

(54) **TROCKENFILTER MIT ERHÖHTER ABSCHEIDELEISTUNG UND GÜNSTIGEN ABMESSUNGEN**
DRY FILTER WITH IMPROVED SEPARATION AND BENEFICIAL DIMENSIONS
FILTRE SEC À PERFORMANCE DE SÉPARATION ACCRUE ET À DIMENSIONS AVANTAGEUSES

(30) Priorität: 04.01.2018 DE 102018100135; 20.11.2018 DE 102018129177
(43) Veröffentlichungstag der Anmeldung: 10.07.2019
(73) Patentinhaber: CFT GMBH COMPACT FILTER TECHNIC, 45964 Gladbeck (DE)
(72) Erfinder: Both, Reinhold, 45889 Gelsenkirchen (DE); Haubold, Christian, 45964 Gladbeck (DE)
(74) Vertreter: Schulte & Schulte

(56) Entgegenhaltungen:
- EP-A1- 0 296 278
- DE-A1- 2 703 260
- DE-A1-102008 027 210
- US-A- 3 928 008

## Beschreibung

Die Erfindung betrifft einen Trockenfilter zum Abscheiden von Staub und sonstigen flugfähigen Stoffen aus industriellen Abgasen und den staubhaltigen Wettern des untertägigen Berg- und Tunnelbaus, mit einem Filtergehäuse mit Filterelementen und zugeordnetem Rohgaskanal und über eine Trennwand davon getrenntem Reingaskanal, wobei die Filterelemente vom Rohgaskanal aus zu beaufschlagen und bezüglich Wetterführung mit dem Zuführungskanal des Reingaskanals verbunden sind und das Filtergehäuse mit einem Austragsorgan für den abgeschiedenen Staub und einem Ventilator für den Wettertransport ausgerüstet ist.

Aus der DE 295 20 680 U1 ist ein einteiliges Filterelement bekannt, bei dem die Rohgase in das Filtergehäuse eingeführt werden, wobei sie dann durch Filterflächen in den Reingaskanal gelangen, der als Austrittsspalt bezeichnet ist. Dieser Austrittsspalt stellt den Beginn des Reingaskanals dar, wobei das Reingas dann senkrecht nach oben weiter abströmen kann. Das Rohgas muss vom Boden her kommend entgegen des herabfallenden Staubes geführt werden, was zu schädlichen Verwirbelungen führt. Nachteilig ist auch der Aufbau eines solchen Filtergehäuses, der wegen der besonderen Anordnung und Form der Filterelemente bei den beengten Verhältnissen untertage häufig problematisch ist. In der DE 101 31 852 B4 ist ein Trockenfilter beschrieben, der sich dadurch auszeichnet, dass der Reingaskanal und der Rohgaskanal so an das Filtergehäuse angeschlossen sind, dass durch Trennwände dreieckige Teilabschnitte im Filtergehäuse gebildet werden. An diesen Trennwänden werden die Filterelemente angeordnet, wobei bei der beschriebenen Ausführung ein Drittel der Fläche des Filtergehäuses für die Rohgasführung und zwei Drittel für die Reingasabführung zur Verfügung stehen. Damit kann nur ein Teil der Gesamtfläche des Filtergehäuses für die Abscheidung des Staubes ausgenutzt werden. In der Figur 1 der EP 0 296 278 A ist die Führung von Roh- und Reingaskanal mit einer vertikalen Trennwand gezeigt. Lediglich Teile dieser Trennwand verlaufen schräg, bleiben aber vertikal stehen. Hier liegen der Roh- und Reingaskanal nebeneinander, sodass der Rohgaskanal das Rohgas nicht über die gesamte Gehäusefläche auf die Filterelemente verteilen kann. Eine optimale Nutzung der Filterelemente/Gehäusefläche ist wie beim vorgenannten Stand der Technik nicht möglich. Die DE 10 2008 027 210 A1 hat vor allem eine elektrostatische Absicherung zum Gegenstand. Beschrieben ist ein Dichtelement, das gasundurchlässig ist und das vom Abschaltelement umgangen wird. Das Abschaltelement ist am Filterblech, d. h. Gehäuseblech elektrisch leitend angeschlossen, um aufgetretene elektrostatische Aufladungen schnell und sicher abzubauen. Eine Trennwand zwischen Roh- und Reingaskanal ist nicht erwähnt und auch nicht dargestellt. Die DE 27 03 260 A1 verdeutlicht, dass durch die Anordnung von Roh- und Reingaskanal oberhalb des Filterraumes und zwar sich gegenseitig verengend geführt, eine sinnvolle, größtmögliche Ausnutzung der Gehäusefläche nicht möglich ist. Die Trennwand verläuft vertikal und schräg zum Gehäuseende hin, wie in Figur 16 der vorliegenden Anmeldung links gezeigt. In der US 3 928 008 A ist ein rechteckiger Filterapparat gezeigt, der schräg im Filtergehäuse angeordnet ist. Eine Trennwand ist nicht erwähnt und nicht gezeigt.

Der Erfindung liegt daher die Aufgabe zu Grunde, einen Trockenfilter so auszubilden, dass ein Filtergehäuse eine geringe Bauhöhe aufweist, die Abscheideleistung gegenüber bekannten Trockenfiltern erhöht und den Einsatzbedingungen entsprechend veränderbar ist.

Die Aufgabe wird erfindungsgemäß dadurch gelöst, dass Rohgaskanal und Reingaskanal horizontal übereinanderliegend im Filtergehäuse angeordnet und durch die darin verlaufende, die gesamte Filtergehäusehorizontale bildende Trennwand voneinander getrennt sind, wobei die Trennwand vom Rohgaseintritt schräg zum Dach des Filtergehäuses hochführend und die Filterelemente mit der Trennwand und/oder der Rahmenkonstruktion des Filtergehäuses verbunden sind.

Mit einem derart ausgebildeten Trockenfilter ist es zunächst einmal möglich, den Innenraum eines derartigen Filtergehäuses günstig auszunutzen, weil Rohgaskanal und Reingaskanal übereinander im Filtergehäuse verlaufen, sodass die gesamte Filterfläche durch den Rohgaskanal optimal ausgenutzt werden kann. Die staubhaltige Luft im untertägigen Berg- und Tunnelbau kann somit vollflächig vom Rohgaskanal den entsprechenden Filterelementen zugeführt und nach Durchströmung der Filterelemente über den Reingaskanal genauso optimal abgeführt werden. Die Abscheideleistung derartiger Trockenfilter ist somit deutlich größer als die bisher bekannter Trockenfilter und durch die Anordnung der Kanäle übereinander und entsprechend zu den Seitenwänden hin ausgedehnt so, dass die Abmaße eines derartigen Trockenfilters gegenüber bekannten deutlich günstiger sind. Vor allem ist die Höhe eines derartigen Filtergehäuses günstiger, sodass auch in den beengten Verhältnissen untertage ein Heranführen des Trockenfilters an den Entstehungsort des Staubes möglich ist. Außerdem ist ein derartiger Filter durch Verlängerung oder Verkürzen des Filtergehäuses den Einsatzgegebenheiten gut anpassbar.

Nach einer zweckmäßigen Ausbildung der Erfindung ist vorgesehen, dass der Rohgaskanal einem ersten Filtergehäuse und der Reingaskanal einem zweiten Filtergehäuse zugeordnet und beide über die freien Seitenrahmen der Rahmenkonstruktion miteinander verbunden sind. Diese Ausbildung gibt die Möglichkeit, die einzelnen Bauteile weitgehend übertage vorzubereiten und dann nach untertage zu bringen, sodass dann dort nur noch die Endmontage stattfindet, wobei diese Konstruktion weiter den Vorteil hat, dass bei Bedarf die Anpassbarkeit an erhöhte Leistungsanforderung durch Zwischenschaltung eines dritten Filtergehäuses ermöglicht ist.

Eine einwandfreie Entstaubung ist erreichbar, wenn der Reingaskanal oberhalb und seitlich des Rohgaskanals verlaufend ausgebildet ist. Die staubhaltigen Wetter werden über den Rohgaskanal verteilt und den darunterliegenden Filterelementen zugeführt. Der Staub wird an den Wänden der Filterelemente niedergeschlagen und die gereinigten Wetter ziehen im seitlichen Zuführungskanal (Reingaskanal) zum eigentlichen Reingaskanal hoch, worin sie gesammelt den Reingasaustritt erreichen.

Eine Anpassung der Abscheideleistung an sich ändernde Gegebenheiten ist dadurch vereinfacht möglich, dass erstes und zweites Filtergehäuse aus mehreren, miteinander und/oder mit der Rahmenkonstruktion der Filtergehäuse zu verbindenden Teilgehäusen zusammengesetzt sind. Diese Teilgehäuse sind austauschbar, sodass bei notwendig werdenden Reparaturen, aber insbesondere bei der Anpassung der Abscheideleistung die nötigen Elemente leicht ausgetauscht werden können.

Das erste und zweite Filtergehäuse kann schnell und sicher miteinander verbunden werden, da dem ersten Filtergehäuse Seitenrahmen beidseitig zugeordnet sind, die mit den Schraubenlöchern des Seitenrahmens des zweiten Filtergehäuses korrespondierende Schraubenlöcher aufweisen. In diese Schraubenlöcher werden Schrauben eingeführt, sodass die einzelnen Filtergehäuse bei Bedarf auch wieder auseinandergenommen und teilweise durch andere ersetzt werden können. Auch dies vereinfacht die Anpassung an sich ändernde Gegebenheiten.

Die beschriebene Ausführung dient dazu, einzelne Filtergehäuse miteinander zu verbinden. Die Anbringung von Rohgaseintritt und Reingasaustritt können auf ähnliche Art und Weise erfolgen, weil der Rohgaseintritt und der Reingasaustritt zugleich als Bauteile ausgebildet sind, die als Endplatten mit dem ersten und/oder dem zweiten Filtergehäuse verbindbar ausgebildet sind. Die jeweiligen Enden der miteinander zu verbindenden Teilgehäuse werden auf diese Art und Weise zum geschlossenen Filtergehäuse, da die Endplatten auch gleichzeitig die entsprechenden Öffnungen verschließen, wobei auch hierzu entsprechend korrespondierende Schraubenlöcher in den Rahmenteilen vorgesehen sind.

Weiter vorn ist erläutert worden, dass die einzelnen Teilgehäuse im Filtergehäuse so angeordnet werden, dass sie miteinander und mit der Rahmenkonstruktion das Filtergehäuse bilden, wobei hierzu zweckmäßigerweise vorgesehen ist, dass die Teilgehäuse in die Rahmenkonstruktion seitlich einschiebbar und dort festlegbar ausgebildet sind. Sowohl bei Verschleiß wie auch bei anderen Problemen kann auf diese Art und Weise ein Teilgehäuse mit Problemen gegen ein neues oder repariertes Teilgehäuse ersetzt werden, was einfach und schnell erfolgen kann, und zwar ohne den Betrieb lange aufzuhalten.

Die weiter vorn erwähnte Trennwand muss nicht zwangsweise in der Rahmenkonstruktion von vorn herein festgelegt sein, vielmehr ist es zweckmäßig, wenn die Trennwand nach Einschieben der Teilgehäuse in die Rahmenkonstruktion des Filtergehäuses in diese einschieb- und dort festlegbar ausgebildet ist. Dabei wird die Trennwand auch bei zwei Filtergehäusen als ein Bauteil eingeschoben, wobei es aber auch denkbar ist, dass die Trennwand geteilt und jedem einzelnen Filtergehäuse entsprechend zugeordnet ist, wobei dann beide Teile der Trennwand die Gesamttrennwand ergeben.

Nach einer weiteren Ausbildung ist vorgesehen, dass die Trennwand aus den einzelnen Teilgehäusen zugeordneten Teilstücken besteht, die verdreh- oder höhenverstellbar ausgebildet sind. Die entsprechend dann beim Montieren eingestellten Teilstücke bilden als solches die weiter oben erläuterte Trennwand.

Ein günstiges Montieren der Gesamtkonstruktion ist möglich, wenn die Rahmenkonstruktion des ersten und des zweiten Filtergehäuses ein einfaches Ankoppeln der Endplatten mit Rohgaseintritt und Reingasaustritt sowie der Teilgehäuse ermöglichend ausgebildet sind. Dies erreicht man vor allem dadurch, dass die Seitenrahmen auf beiden Seiten der Rahmenkonstruktion eines Filtergehäuses gleich ausgebildet sind, sodass diese sowohl zur Verbindung der Endplatten wie auch der einzelnen Filtergehäuse miteinander Verwendung finden können.

Um die Abscheideleistung sich ändernder Gegebenheiten auch im großen Rahmen gut anpassen zu können, sieht die Erfindung vor, dass die Rahmenkonstruktion des ersten und zweiten Filtergehäuses mit der eines dritten und vierten Filtergehäuses kombinierbar ausgeführt ist, wobei sich hier die schon beschriebenen Seitenrahmen mit Bohrungslöchern eignen. Darüber hinaus sind auch andere Verbindungsarten möglich, um so ein entsprechend verlängertes Gesamtfiltergehäuse zu erreichen.

Eine weitere Ausbildung der Erfindung sieht vor, dass der Rohgaskanal am Rohgaseintritt ein Schutzsieb aufweist, das in Strömungsrichtung des Rohgases trichterförmig ausgebildet ist. Dieses trichterförmig ausgebildete Schutzsieb sorgt dafür, dass kein entsprechend grober Schmutz in das Innere des Trockenfilters gelangen kann. Das Schutzsieb muss in regelmäßigen Abständen gereinigt werden, um auf diese Art und Weise eine immer gleichmäßige Strömung im Trockenfilter aufrecht zu erhalten.

Um lästige Schmierarbeiten und andere Wartungsarbeiten weitgehend zu vermeiden, sieht die Erfindung weiter vor, dass das Austragsorgan eine Umkehre mit Steckachse aufweist, die in einem Kulissenstein mit Graphitlager gelagert ist. Damit ist es vorteilhaft im Sinne der Erfindung möglich, den Bereich des Austragsorgans möglichst wenig platzaufwendig zu gestalten.

Da naturgegeben im Trockenfilter recht feinkörniges Staubmaterial abgeschieden und dann ausgetragen werden muss, sieht die Erfindung vor, dass das Austragsorgan als Kettenkratzförderer ausgebildet ist, dessen Mitnehmer mit einem dem oberen Rahmen der Umkehre zugeordneten Gummiabstreifer kurzzeitig in Kontakt kommen. Auf diese Weise wird das feinkörnige Material, das sich auf den Mitnehmern oben sonst ablagern würde, regelmäßig abgestreift und kann weiter abtransportiert und entsorgt werden.

Ebenfalls der Aufgabe den Trockenfilter möglichst klein auszubilden dient die Lösung, nach der der Umkehre ein Niederhalter zugeordnet ist, der als Rolle ausgebildet ist. Dieser Niederhalter sorgt dafür, dass die Kette mit ihren Mitnehmern immer gleichförmig geführt werden kann, was im Bereich der Umkehre über einen bisher stangenförmigen Niederhalter erreicht wurde. Mit der Rolle wird erreicht, dass eine hohe Störunanfälligkeit sichergestellt.

Der aus dem Rohgaskanal absinkende Staub kann im Bodenbereich gleich auf den Kettenkratzförderer weitergegeben werden, weil erfindungsgemäß der Rohgaskanal einen Boden aus Lichtgitterplatten aufweist, die das Durchfallen des Staubes problemlos sicherstellen, wobei diese Lichtgitterplatten einfach sauber gehalten werden können und auch leicht zu montieren und zu demontieren sind.

Die Filterelemente, die im Innenraum des Trockenfiltergehäuses angeordnet sind, werden über eine Dichtung bezüglich Feuchtigkeit und anderer Beeinflussungselemente gesichert, wobei vorteilhafterweise die Filterelemente über eine Kupferlitze unter Umgehung einer elastischen Dichtwulst mit der Außenwandung des Filtergehäuses in Verbindung stehen und dass zwischen dem Filtergehäuse und dem Rand der Filterelemente diese gasundurchlässige elastische Dichtwulst angeordnet ist. Dadurch kann eine negative elektrische Aufladung des Innenraums praktisch jedes einzelnen Filterelementes sicher vermieden werden.

Dadurch dass der Rohgaskanal und der Reingaskanal übereinander liegen, wird der Reinigungseffekt des erfindungsgemäßen Entstaubers entscheidend verbessert. Erfindungsgemäß wird dies erreicht, indem die zur Staubabscheidung zur Verfügung stehende Rohgaskanalbodenfläche um 80 - 100 % ohne Vergrößerung des Filtergehäuses erhöhbar und gleichzeitig die Wettergeschwindigkeit um 40 - 50 % verringerbar ist.

Ist mit Anfall großer Mengen Staub zu rechnen oder bestehen mit der Abförderung des Staubes Probleme, ist es vorteilhaft, wenn zwischen Austragsorgan und Boden des Rohgaskanals oder der Unterkante der Filterelemente ein trichterförmiger Bunker ausgebildet ist. Zwar ist dann die Gesamthöhe des Filtergehäuses zu erhöhen, doch wird dies durch eine gleichmäßige Abförderung des Staubes ausgeglichen.

Statt mehrerer Filtergehäuse hintereinander anzuordnen, besteht auch die Möglichkeit, zwei Filtergehäuse mit Bunker und ohne Zwischenwand nebeneinander stehend zu einer Baueinheit zusammenzufügen sind, wobei auch bei dem Rohgaskanal und dem Reingaskanal auf senkrechte oder annähernd senkrechte Zwischenwände zu verzichtet ist. Auf diese Weise kann man die Anlage den örtlichen Gegebenheiten des Einsatzortes optimal anpassen.

Mit Hilfe der vorliegenden Erfindung ist ein Trockenfilter geschaffen, der gerade im untertägigen Berg- und Tunnelbau vorteilhaft eingesetzt werden kann, wo sich der Staubanfall je nach Gewinnungstechnik laufend ändert. Die Rahmenkonstruktion des ersten und des zweiten Filtergehäuses sowie auch des dritten oder sonstigen Filtergehäuses sind so korrespondierend ausgebildet, dass sie eine Kombination ermöglichen, wobei die günstige Bauhöhe des Trockenfilters insgesamt beibehalten werden kann. Vorteilhafterweise kann mit der Erfindung eine von rund 1,85 m² auf rund 3,7m² erhöhte Beschickungsfläche zwischen Rohgaskanal und Filterelementen zur Verfügung gestellt werden, so dass statt der bisher üblichen mehr als fünf Meter pro Sekunde Wettergeschwindigkeit diese nunmehr auf 2,7 Meter pro Sekunde reduziert werden kann, wenn man davon ausgeht, dass rund 600m³ Wetter in dieser Zeit durch den Filter hindurchgeführt werden.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: eine Seitenansicht des Trockenfilters,
- Figur 2: eine Draufsicht auf den Trockenfilter,
- Figur 2a-2c: Anordnungen einer Kupferlitze,
- Figur 3: eine Rückansicht des Trockenfilters,
- Figur 4: eine Vorderansicht des Rohgasaustritts,
- Figur 5: eine Ansicht des Rohgaseintritts in Richtung Reingasaustritt,
- Figur 6: eine perspektivische Ansicht mit der schräg in Richtung Reingasaustritt nach unten verlaufender Trennwand,
- Figur 7: den Rohgaseintritt mit Schutzsieb,
- Figur 8: eine Teilansicht der Umkehre im Schnitt,
- Figur 9: den Bereich der Umkehre, in den der nicht gezeigte Kettenkratzförderer eintritt,
- Figur 10: eine Teilansicht der Umkehre mit Niederhalter,
- Figur 11: einen Ausschnitt des Rohgaskanals mit Lichtgitter,
- Figur 12: eine Seitenansicht des Entstaubers mit Kratzband,
- Figur 13: eine Seitenansicht des Entstaubers mit Bunker,
- Figur 14: eine Seitenansicht des Entstaubers mit Doppelbunker und Doppelfilterelementen,
- Figur 15: eine Seitenansicht des Entstaubers mit Doppelbunker und Doppelfilterelementen in mehreren Etagen und
- Figur 16: Draufsicht auf den Boden von Rohgas- und Reingaskanal alter und neuer Bauart.

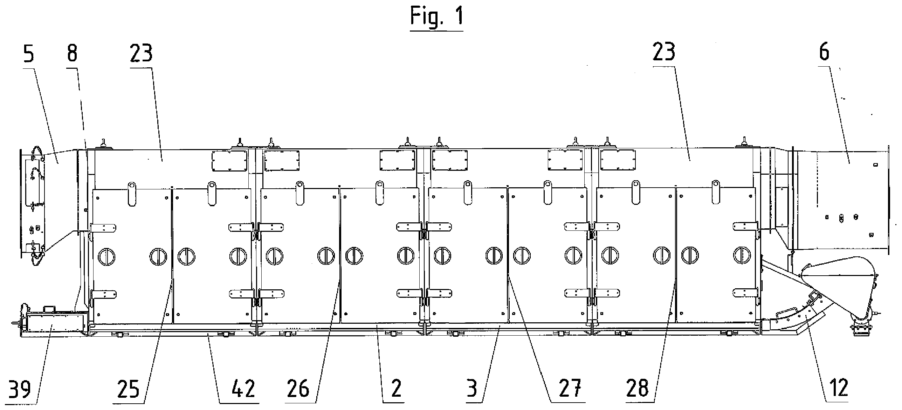

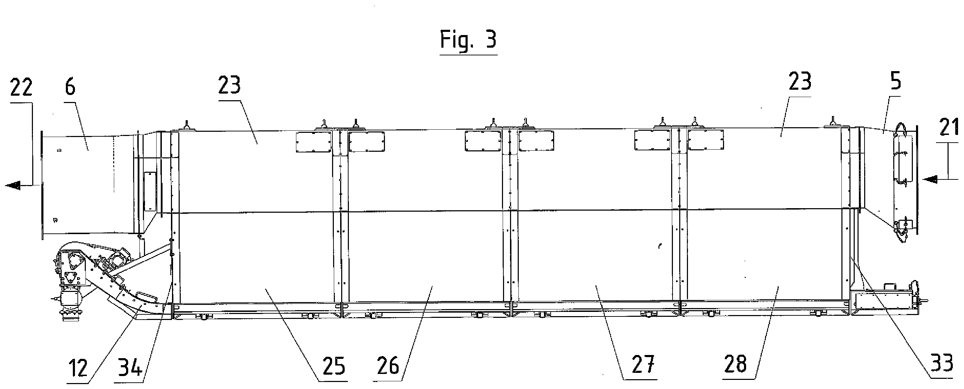

Bei dem in Figur 1 und Figur 3 gezeigten Trockenfilter 1 ist das erste Filtergehäuse 2 und das zweite Filtergehäuse 3 als Einheit gezeigt. Auf der einen Seite ist der Rohgaskanal 5 mit seinem Rohgaseintritt 21 erkennbar und auf der anderen Seite der Reingaskanal 6 mit seinem Reingasaustritt 22, die beide mehr oder weniger gleich ausgebildet sind. Es ist hiermit auch verdeutlicht, dass Roh- und Reingaskanal 5, 6 etwa in der gleichen Ebene an das Filtergehäuse 2, 3 angeschlossen sind. Erkennbar sind die Teilgehäuse 25, 26, 27, 28, die jeweils eine schwenkbare Tür 53 zu einer Seite aufweisen, so dass man einfach bei Bedarf an die Filterelemente 9, 10, 11 gelangen kann. Mit 23 ist das Dach des Filtergehäuses 2, 3 bezeichnet.

Unter dem Filtergehäuse 2, 3 befindet sich ein Austragsorgan 12, hier ein Kettenkratzförderer 42, über den der abgeschiedene oder abgetrennte Staub weiterbefördert werden kann. Alternativ kann auch ein Bunker 54 als Austragsorgan zum Einsatz kommen.

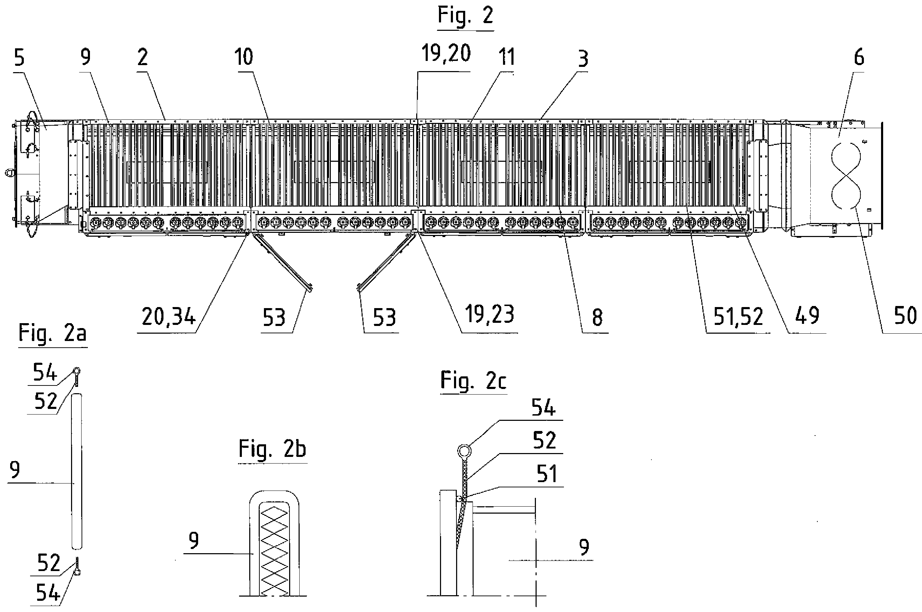

Figur 2 zeigt das Filtergehäuse 2, 3 des Trockenfilters 1 von oben her und im Schnitt, so dass man die einzelnen Filterelemente 9, 10, 11 sehen kann. Zwischen den Filtergehäusen 2, 3 sind an den Seitenrahmen 19, 20 Verbindungselemente angebracht, so dass diese Gehäuse 2, 3 schnell und leicht zu verbinden sind, was im Übrigen die Rückansicht nach Figur 3 auch noch mal verdeutlicht. Die einzelnen Filterelemente 9, 10, 11 und diese umgebenden Bereiche sind gegenüber der Außenwandung 49 des Filtergehäuses 2, 3 abgedichtet und zwar durch eine nicht näher gezeigte Dichtwulst 51, die durch eine Kupferlitze 52 umgangen wird, so dass eine negative elektrische Aufladung des Innenraums des einzelnen Filterelementes 9, 10, 11 vermieden werden kann.

In den Bereich des Reingaskanals 6 ist ein hier nicht näher gezeigter Ventilator 50 integriert.

Figur 2a bis Figur 2c zeigen die Anordnung einer Kupferlitze 52 an den Filterelementen 9, 10, 11, um - wie schon erwähnt - eine negative Aufladung des Innenraums zu vermeiden. Die Kupferlitze 52 umgeht die Dichtwulst 51 und ist an die Außenwandung 49 des Filtergehäuses 2, 3 angeschlossen. Zur leichteren Montage ist die Kupferlitze 52 endseitig mit einer Öse 54 ausgerüstet. Mit 53 sind die schwenkbaren Türen der einzelnen Filtergehäuse 2, 3 bezeichnet.

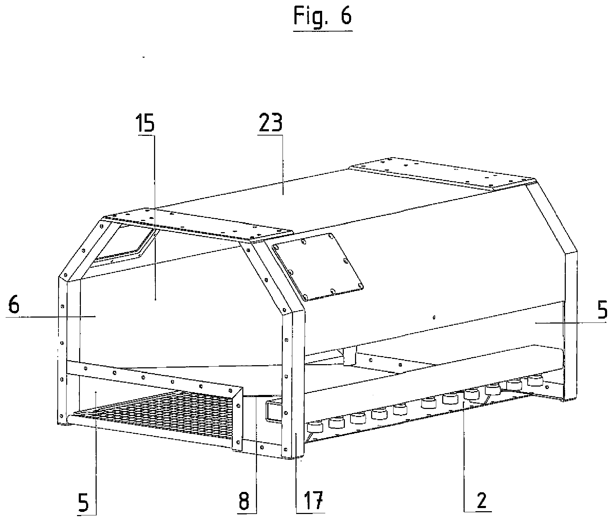

Die Lage bzw. Anordnung der Trennwand 8 wird anhand der Figur 6 verdeutlicht, wobei hier auch gezeigt ist, dass das über den Rohgaskanal 5 einströmende Rohgas über die schräg nach unten verlaufende Trennwand 8 so geführt wird, dass die Filterelemente 9, 10, 11 wirksam werden können, damit dann das gereinigte Rohgas über Zuführungskanal 6' den Reingaskanal 6 wieder abgeführt werden kann. Die Trennwand 8 verläuft in etwa in der Filtergehäusehorizontalen 15, sodass für die Führung des Rohgases und dann des Reingases eine große Trennfläche zur Verfügung steht.

Die Rahmenkonstruktion 17 des Filtergehäuses 2 und 3 bildet ein starkes Gerüst, in das die einzelnen Teilgehäuse 25, 26, 27, 28, wie in Figur 1 gezeigt, von der Seite her eingeschoben werden können. Endseitig der Rahmenkonstruktion 17 sind dann die Seitenrahmen 19, 20 vorgesehen, die wie in Figur 2 gezeigt, das Verbinden der beiden Filtergehäuse 2 und 3 ermöglichen und zwar ohne großen Aufwand. Oben auf der Rahmenkonstruktion 17 ist das Dach 23 untergebracht, während die Seitenwände hier nicht besonders gekennzeichnet sind. Die Teilgehäuse 25 - 28 werden über die Seitenrahmen 19, 20 mit eingespannt oder an der Rahmenkonstruktion 18 festgelegt.

Jedes der Filtergehäuse 2 und 3 verfügt über die gleiche Anzahl von Teilgehäusen 25 - 28, 28'. An den jeweiligen Enden der Rahmenkonstruktion 17 sind Endplatten 33, 34 angeordnet, die auf die gleiche Art und Weise befestigt werden, wie die Seitenrahmen 19, 20 und die gleichzeitig als Rohgaseintritt 21 und Reingasaustritt 22 dienen bzw. an die der Rohgaskanal 5 und der Reingaskanal 6 angeschlossen sind. Die Schraubenlöcher 30, 31 sind über die Länge und Breite der Seitenrahmen 19, 20 und auch im Bereich der Endplatten 33, 34 angeordnet, um so ein schnelles und sicheres Koppeln zu ermöglichen.

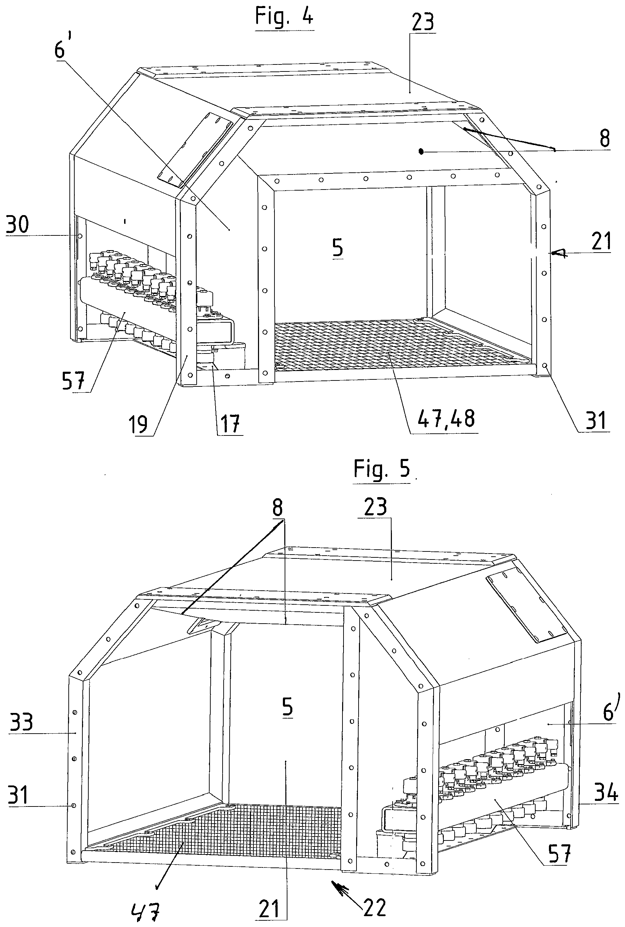

Figur 4 zeigt den Rohgaseintritt 21 mit der schräg zum Dach 23 verlaufenden Trennwand 8. Die einzelnen Filterelemente 9, 10, 11 sind hier nicht dargestellt. Erkennbar sind die verschiedenen Schraubenlöcher 30 am Seitenrahmen 19, 19'. Über diese Schraubenlöcher 30 ist das Ankoppeln an das nächste Filtergehäuse 3 oder auch das Ankoppeln der hier nicht dargestellten Endplatten 33, 34 möglich.

Figur 5 wiederum verdeutlicht, dass die Trennwand 8 bezüglich Reingaskanal 6 vom Reingasaustritt 22 her gesehen schräg nach unten zum Boden 47 verläuft. Es steht ein entsprechend großer Querschnitt zur Verfügung, der dem am Rohgaseintritt 21 entspricht. Auch hier sind Schraubenlöcher 31 vorgesehen, die das Ankoppeln der Endplatte 33 oder 34 bzw. eines weiteren Filtergehäuses 2 ermöglichen, wenn dann die Trennwand 8 auch entsprechend angepasst eingelegt werden muss.

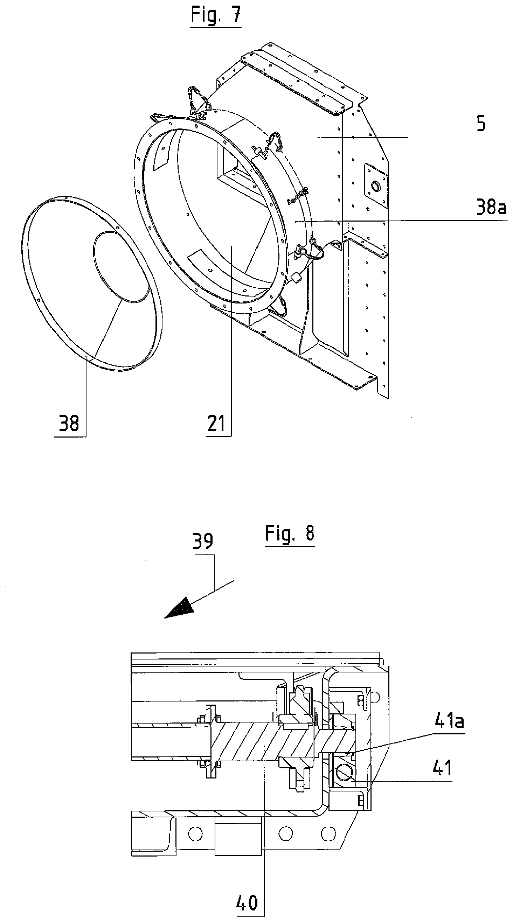

Figur 7 zeigt den Rohgaskanal 5 mit seinem Rohgaseintritt 21. Diesem zugeordnet ist ein Schutzsieb 38, das in Strömungsrichtung des Rohgases trichterförmig ausgebildet ist. Entsprechendes ist leicht zu erkennen. Dieses Schutzgitter 38 wird so eingesetzt, dass es leicht zum Säubern wieder entfernt werden kann. Es dient dem Auffangen der gröberen Staubteile. Zudem kann dieses Schutzgitter 38 über zusätzliche Klappen gereinigt werden.

Die Umkehre 39 des Kettenkratzförderers ist in Figur 8 gezeigt, wobei sie hier über eine Steckachse 40 verfügt, die in einen Kulissenstein 41 mit Graphitlager eingeschoben ist, so dass auf Wartungsarbeiten praktisch verzichtet werden kann; dies ist vorteilhaft, weil damit den beengten Gegebenheiten unter Tage Rechnung getragen werden kann. Der Kettenkratzförderer ist als solches in Figur 1 gezeigt und mit 42 gekennzeichnet.

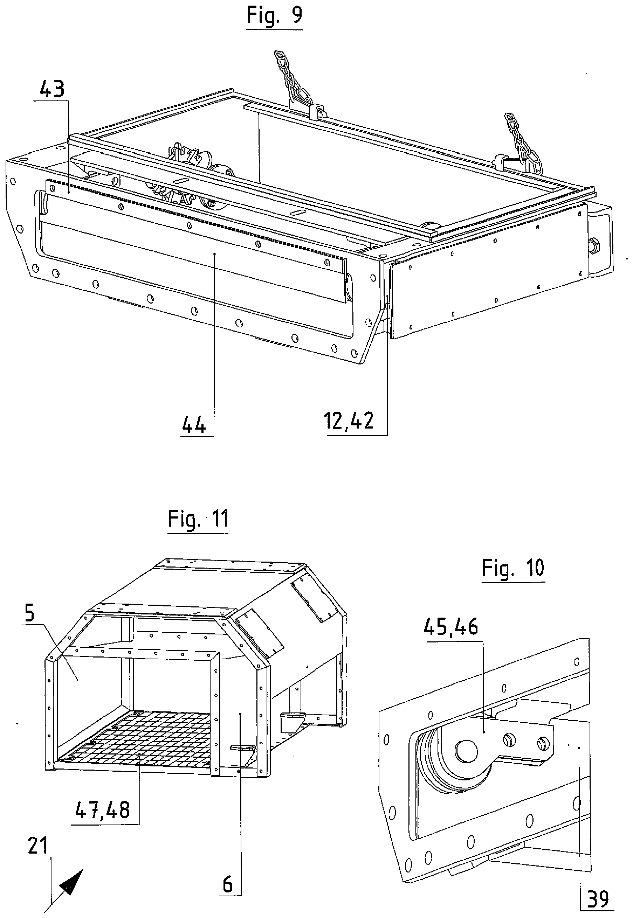

Der obere Rahmen 43 im Bereich der Umkehre 39 ist in Figur 9 gezeigt, wobei im Bereich des Einlaufes in diese Umkehre ein Gummiabstreifer 44 erkennbar ist. Über diesen werden die einlaufenden Mitnehmer des Kettenkratzförderers 42 gleichmäßig vom drauflagernden feinen Staub befreit.

Ein gezieltes Einlaufen der Mitnehmer des Kettenkratzförderers 42 in die Umkehre 39 wird über einen Niederhalter 55 sichergestellt, der hier nach Figur 10 die Form einer Rolle 46 aufweist. Damit werden Beschädigungen in diesem Bereich vermieden und auch gleichzeitig eine sichere Führung der Mitnehmer bzw. des gesamten Kettenkratzförderers 42 sichergestellt.

Der Rohgaskanal 5 nach Figur 11 weist einen Boden 47 auf, der aus Lichtgitterplatten 48 gebildet ist. Dadurch kann der sich vom sanft darüber streichenden Wetterstrom abscheidende Feinstaub sicher durch das Lichtgitter hindurch auf den darunter liegenden Kettenkratzförderer 42 fallen und dann entsorgt werden.

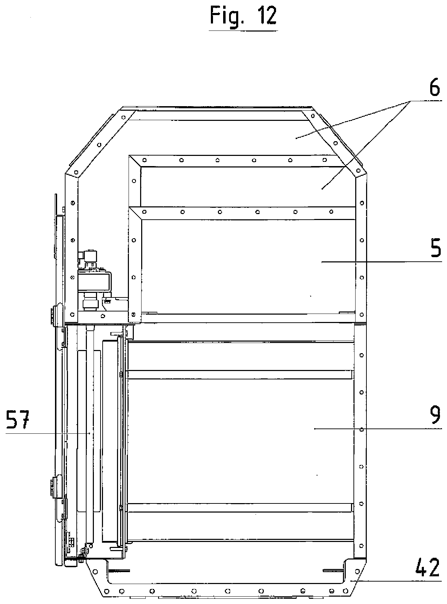

Ein Filtergehäuse 2, 3 im Schnitt zeigt Figur 12. Erkennbar ist, dass oberhalb der Filterelemente 9 der Rohkanal 5 verläuft, aus dem das Rohgas in die Filterelemente 9, 10, 11 strömt, um vom mitgeführten Staub befreit zu werden. An den Elementen zur Abreinigung 57 vorbei strömen die nun als Reingas bezeichneten Wetter in den senkrecht und dann waagerecht angeordneten Reingaskanal 6. Der Kettenkratzförderer 42 bildet hier den Standfuß 60 des Filtergehäuses 2, 3 und zwar ohne die Gesamthöhe der genannten Einheit wesentlich zu erhöhen. Der Boden 47' ist als Gitter ausgeführt.

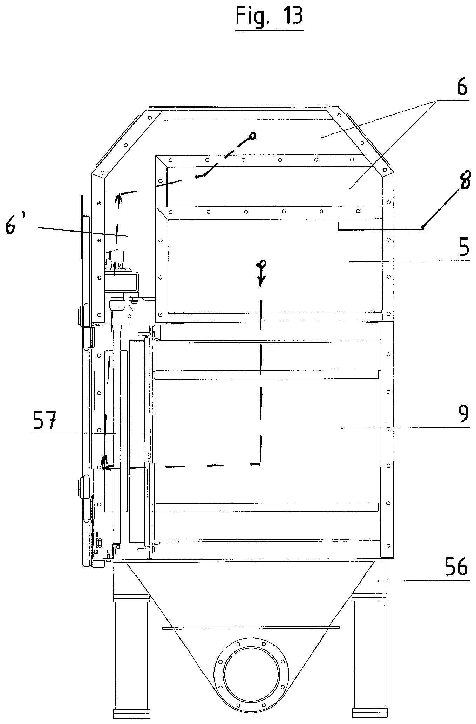

Bei der Ausführung des Filtergehäuses 2, 3 nach Figur 13 ist zusätzlich zwischen den Filterelementen 9, 10, 11 und dem Förderer mit Austragsorgan 12 ein trichterförmiger Bunker 56 vorgesehen. Die Standfüße 60 sind hier stabile Rohrstücke. Je nach Bedarf kann der Bunker 56 bemessen werden, wobei die örtlichen Gegebenheiten die Höhe bestimmen.

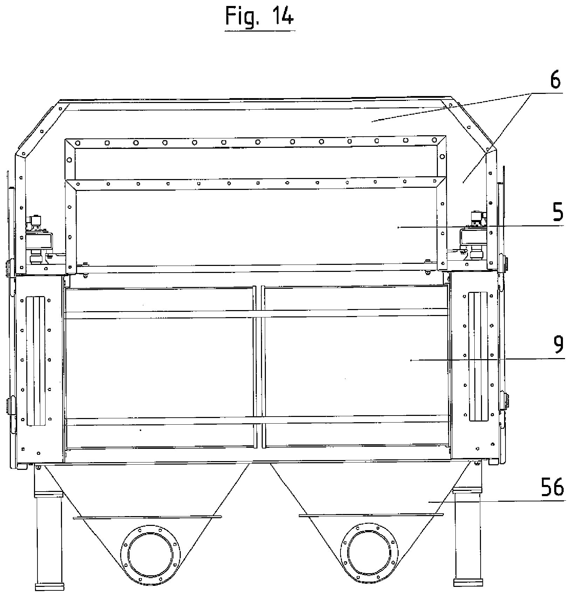

In aller Regel werden insbesondere im untertägigen Bergbau mehrere Filtergehäuse 2, 3 hintereinander angeordnet und zu einer Baueinheit zusammengefügt. Nach Figur 14 sind zwei Filtergehäuse 2, 3 nebeneinander zusammengefügt, wobei weitere Doppelgehäuse hintereinander zum Einsatz kommen können. Während die Filterelemente 9 und 9' wie bei Einzelgehäusen ausgeführt sind, bilden die darüber angeordneten Rein- und Rohgaskanäle 6, 5 jeweils eine Baueinheit 61. Insbesondere bei einer großen Wettermenge ist eine solche Ausführung vorteilhaft, weil sehr große Kanäle zur Verfügung gestellt werden können.

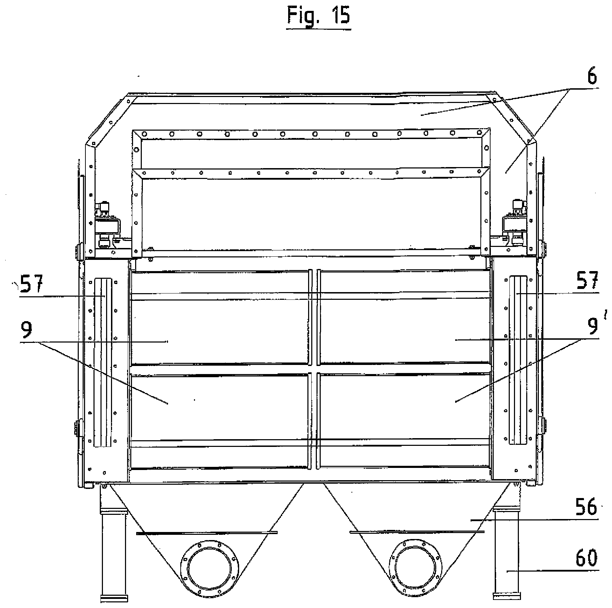

Figur 15 zeigt einen Entstauber, bei dem nicht nur zwei Filterelemente 9, 9' nebeneinander, sondern auch jeweils zwei übereinander angeordnet sind.

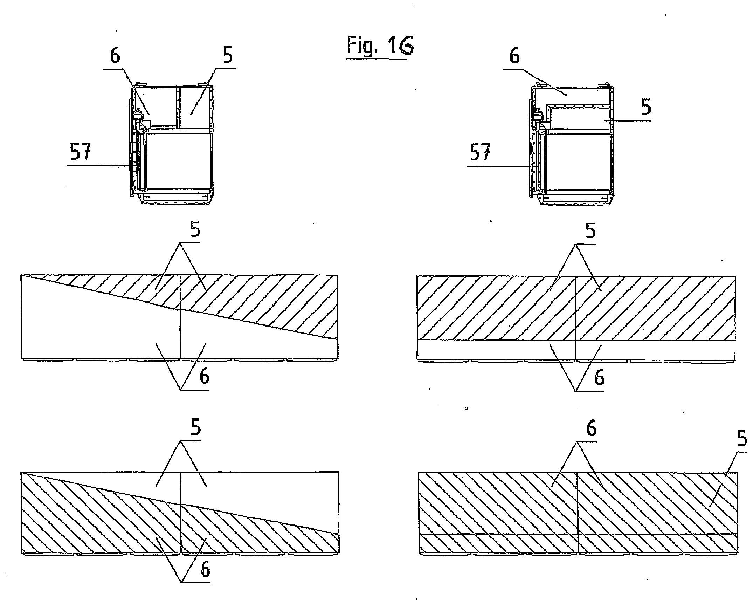

Schon mit einem Blick macht Figur 16 deutlich, welch große Vorteile der erfindungsgemäße Trockenfilter möglich macht. Dadurch, dass der Roh- und der Reingaskanal 5, 6 übereinanderliegend ausgebildet sind, kann das Rohgas über die gesamte Länge die darunter angeordneten Filterelemente erreichen und durchströmen. Statt wie die linke Anordnung zeigt 1,85 m² stehen nun 3,73 m² zur Verfügung, wobei z. B. bei 600 m³ anfallendem Rohgas die Wettergeschwindigkeit von 5,4 m/s auf 2,68 m/s fällt, was zu einer verbesserten Staubabscheidung führt, weil die geringere Wettergeschwindigkeit das Anlagern des Staubes an den Filterelementen 9, 10, 11 begünstigt. Während bei der linken Anordnung, also dem Stand der Technik, die Trennwand 8 senkrecht angerordnet ist und schräg verläuft, das Rohgasfeld also kontinuierlich kleiner und das Reingasfeld größer werden lässt, steht dem Rohgas bei dem rechten, d. h. bei der erfindungsgemäßen Anordnung über die gesamte Länge des Filtergehäuses 2, 3 das gesamte Rohgasfeld bzw. die Gehäusefläche zur Verfügung. Die Gesamthöhe des Filtergehäuses 2, 3 wird nach Figur 15 dadurch eingehalten, dass die Trennwand 8 vom Rohgaseintritt 21 in Richtung Reingasaustritt 22 schräg zum Dach 23 des Filtergehäuses 2, 3 hochführend ausgebildet ist. Da die "verbleibende" Menge an Rohgas zum Filtergehäuseende naturgemäß geringer wird, kann die vorteilhafte geringe Wettergeschwindigkeit trotz des "kleiner werdenden" Rohgaskanalvolumens beibehalten werden.

Alle genannten Merkmale, auch die den Zeichnungen allein zu entnehmenden, werden allein und in Kombination als erfindungswesentlich angesehen.

## Patentansprüche

1. Trockenfilter (1) zum Abscheiden von Staub und sonstigen flugfähigen Stoffen aus industriellen Abgasen und den staubhaltigen Wettern des untertägigen Berg- und Tunnelbaus, mit einem Filtergehäuse (2, 3) mit Filterelementen (9, 10, 11) und zugeordnetem Rohgaskanal (5) und über eine Trennwand (8) davon getrenntem Reingaskanal (6), wobei die Filterelemente (9, 10, 11) vom Rohgaskanal (5) aus zu beaufschlagen und bezüglich Wetterführung mit dem seitlichen Zuführungskanal (6') des Reingaskanals (6) verbunden sind und das Filtergehäuse (2, 3) mit einem Austragsorgan (12) für den abgeschiedenen Staub und einem Ventilator (50) für den Wettertransport ausgerüstet ist,
**dadurch gekennzeichnet,**
**dass** Rohgaskanal (5) und Reingaskanal (6) horizontal übereinanderliegend im Filtergehäuse (2, 3) angeordnet und durch die darin verlaufende, die gesamte Filtergehäusehorizontale (15) bildende Trennwand (8) voneinander getrennt sind, wobei die Trennwand (8) vom Rohgaseintritt (21) schräg zum Dach (23) des Filtergehäuses (2, 3) hochführend ausgebildet ist, und die Filterelemente (9, 10, 11) mit der Trennwand (8) und/oder der Rahmenkonstruktion (17) des Filtergehäuses (2, 3) verbunden sind.

2. Trockenfilter nach Anspruch 1,
**dadurch gekennzeichnet,**
**dass** der Rohgaskanal (5) einem ersten Filtergehäuse (2) und der Reingaskanal (6) einem zweiten Filtergehäuse (3) zugeordnet und beide über die freien Seitenrahmen (19, 20) der Rahmenkonstruktion (17) miteinander verbunden sind.

3. Trockenfilter nach Anspruch 1,
**dadurch gekennzeichnet,**
**dass** erstes und zweites Filtergehäuse (2, 3) aus mehreren, miteinander und/oder mit der Rahmenkonstruktion (17) der Filtergehäuse (2, 3) zu verbindenden Teilgehäusen (25, 26, 27, 28) zusammengesetzt sind.

4. Trockenfilter nach Anspruch 2,
**dadurch gekennzeichnet,**
**dass** dem ersten Filtergehäuse (2) Seitenrahmen (19, 19') beidseitig zugeordnet sind, die mit den Schraubenlöchern (31) des Seitenrahmens (20) des zweiten Filtergehäuses (3) korrespondierende Schraubenlöcher (30) aufweisen.

5. Trockenfilter nach Anspruch 3,
**dadurch gekennzeichnet,**
**dass** der Rohgaseintritt (21) und der Reingasaustritt (22) zugleich als Bauteile ausgebildet sind, die als Endplatten (33, 34) mit dem ersten und/oder dem zweiten Filtergehäuse (2, 3) verbindbar ausgebildet sind.

6. Trockenfilter nach Anspruch 3,
**dadurch gekennzeichnet,**
**dass** die Teilgehäuse (25, 26, 27, 28) in das Filtergehäuse (2, 3) seitlich einschiebbar und dort festlegbar ausgebildet sind.

7. Trockenfilter nach Anspruch 3,
**dadurch gekennzeichnet,**
**dass** die Trennwand (8) nach Einschieben der Teilgehäuse (25, 26, 27, 28) in die Rahmenkonstruktion (17) des Filtergehäuses (2, 3) in diese einschieb- und dort festlegbar ausgebildet ist.

8. Trockenfilter nach Anspruch 7,
**dadurch gekennzeichnet,**
**dass** die Trennwand (8) aus den einzelnen Teilgehäusen (25, 26, 27, 28) zugeordneten Teilstücken besteht, die verdreh- und/oder höhenverstellbar ausgebildet sind.

9. Trockenfilter nach Anspruch 3,
**dadurch gekennzeichnet,**
**dass** die Rahmenkonstruktion (17) des ersten und des zweiten Filtergehäuses (2, 3) ein einfaches Ankoppeln der Endplatten (33, 34) mit Rohgaseintritt (21) oder Reingasaustritt (22) sowie der Teilgehäuse (25, 26, 27, 28) ermöglichend ausgebildet ist.

10. Trockenfilter nach Anspruch 3,
**dadurch gekennzeichnet,**
**dass** die Rahmenkonstruktion (17) des ersten und zweiten Filtergehäuses (2, 3) mit der eines dritten und vierten Filtergehäuses kombinierbar ausgeführt ist.

11. Trockenfilter nach Anspruch 2,
**dadurch gekennzeichnet,**
**dass** der Rohgaskanal (5) am Rohgaseintritt (21) ein Schutzsieb (38) aufweist, das in Strömungsrichtung des Rohgases trichterförmig ausgebildet ist.

12. Trockenfilter nach Anspruch 1,
**dadurch gekennzeichnet,**
das Austragsorgan (12) eine Umkehre (39) mit Steckachse (40) aufweist, die in einem Kulissenstein (41) mit Graphitlager gelagert ist.

13. Trockenfilter nach Anspruch 12,
**dadurch gekennzeichnet,**
**dass** das Austragsorgan (12) als Kettenkratzförderer (42) ausgebildet ist, dessen Mitnehmer mit einem, dem oberen Rahmen (43) der Umkehre (39) zugeordneten Abstreifer (44) kurzzeitig in Kontakt kommen.

14. Trockenfilter nach Anspruch 13,
**dadurch gekennzeichnet,**
**dass** der Umkehre (39) ein Niederhalter (45) zugeordnet ist, der als Rolle (46) ausgebildet ist.

15. Trockenfilter nach Anspruch 1,
**dadurch gekennzeichnet,**
**dass** der **Rohgaskanal** (**5**) einen Boden (47) aus Lichtgitterplatten (48) aufweist.

16. Trockenfilter nach Anspruch 1,
**dadurch gekennzeichnet,**
**dass** die Filterelemente (9, 10, 11) über eine Kupferlitze (52) unter Umgehung einer elastischen Dichtwulst (51) mit der Außenwandung (49) des Filtergehäuses (2, 3) in Verbindung stehen und dass zwischen dem Filtergehäuse (2, 3) und dem Rand der Filterelemente (9, 10, 11) eine gasundurchlässige elastische Dichtwulst (51) angeordnet ist.

17. Trockenfilter nach Anspruch 1,
**dadurch gekennzeichnet,**
**dass** die zur Staubabscheidung zur Verfügung stehende Rohgaskanalbodenfläche (47') um 80 - 100 % ohne Vergrößerung des Filtergehäuses (2, 3) erhöhbar und gleichzeitig die Wettergeschwindigkeit um 40 - 50 % verringerbar ist.

18. Trockenfilter nach Anspruch 12,
**dadurch gekennzeichnet,**
**dass** zwischen Austragsorgan (12) und Boden (47) des Rohgaskanals (5) oder der Unterkante der Filterelemente (9, 10, 11) ein trichterförmiger Bunker (56) ausgebildet ist.

19. Trockenfilter nach Anspruch 1,
**dadurch gekennzeichnet,**
**dass** zwei Filtergehäuse (2, 3) mit Bunker (56) und ohne Zwischenwand nebeneinander stehend zu einer Baueinheit (61) zusammengefügt sind, wobei auch bei dem Rohgaskanal (5) und dem Reingaskanal (6) auf senkrechte Zwischenwände verzichtet ist.

## Claims

1. Dry filter (1) for separating dust and other dispersible substances from industrial exhaust gases and the dust laden air in underground mine and tunnel construction, having a filter housing (2, 3) with filter elements (9, 10, 11) and assigned raw gas duct (5) and a clean gas duct (6) separated from this by a partition wall (8), whereby the filter elements (9, 10, 11) are to be pressurised from the raw gas duct (5) and are connected with regard to climate control with the lateral feed duct (6') of the clean gas duct (6) and the filter housing (2, 3) having a discharge unit (12) for the filtered dust, and a ventilating fan (50) for transporting air,
**characterised in that**
the raw gas duct (5) and clean gas duct (6) are arranged horizontally one above the other in the filter housing (2, 3) and separated from each other by a partition wall (8) that runs through the housing and forms the complete filter housing horizontal (15) whereby the partition wall (8) runs sloping upwards from the raw gas inlet (21) to the roof (23) of the filter housing (2, 3), and the filter elements (9, 10, 11) are connected with the partition wall (8) and/or the frame construction (17) of the filter housing (2, 3).

2. Dry filter in accordance with Claim 1,
**characterised in that**
the raw gas duct (5) is assigned to a first filter housing (2) and the clean gas duct (6) to a second filter housing (3) and both are connected to each other via the free side frames (19, 20) of the frame construction (17).

3. Dry filter in accordance with Claim 1,
**characterised in that**
first and second filter housing (2, 3) are composed of several part housings (25, 26, 27, 28) that are to be connected with each other and/or with the frame construction (17) of the filter housing (2, 3).

4. Dry filter in accordance with Claim 2,
**characterised in that**
that side frames (19, 19') are assigned to the first filter housing (2) on both sides having screw holes (30) that correspond to the screw holes (31) of the side frame (20) of the second filter housing (3).

5. Dry filter in accordance with Claim 3,
**characterised in that**
the raw gas inlet (21) and the clean gas discharge (22) are designed at the same time as components that are designed to be connectable as end panels (33, 34) with the first and/or the second filter housing (2, 3).

6. Dry filter in accordance with Claim 3,
**characterised in that**
the part housings (25, 26, 27, 28) are designed to be insertable into the filter housing (2, 3) from the side and fixable there.

7. Dry filter in accordance with Claim 3,
**characterised in that**
the partition wall (8) is designed to be inserted and fixed in the frame construction (17) after the part housings (25, 26, 27, 28) have been inserted into the frame construction (17) of the filter housing (2, 3).

8. Dry filter in accordance with Claim 7,
**characterised in that**
the partition wall (8) consists of rotatable and height-adjustable sections assigned to the individual part housings (25, 26, 27, 28).

9. Dry filter in accordance with Claim 3,
**characterised in that**
the frame construction (17) of the first and of the second filter housing (2, 3) is designed to enable simple coupling of the end panels (33, 34) with the raw gas inlet (21) or the clean gas discharge (22) and with the part housings (25, 26, 27, 28).

10. Dry filter in accordance with Claim 3,
**characterised in that**
the frame construction (17) of the first and second filter housing (2, 3) is designed to be combinable with that of a third and fourth filter housing.

11. Dry filter in accordance with Claim 2,
**characterised in that**
the raw gas duct (5) at the raw gas inlet (21) has a protective screen (38) that is designed in the shape of a funnel in the direction of flow of the raw gas.

12. Dry filter in accordance with Claim 1,
**characterised in that**
the discharge unit (12) has an inverter (39) with a quick-release axle (40) that is supported in a sliding block (41) with graphite bearings.

13. Dry filter in accordance with Claim 12,
**characterised in that**
the discharge unit (12) is designed as a chain scraper conveyor (42), whose carriers come briefly into contact with a scraper (44) assigned to the upper frame (43) of the inverter (39).

14. Dry filter in accordance with Claim 13,
**characterised in that**
a retaining device (45) designed as a roller (46) is assigned to the inverter (39).

15. Dry filter in accordance with Claim 1,
**characterised in that**
the **raw gas duct (5)** has a bottom (47) consisting of light grid panels (48).

16. Dry filter in accordance with Claim 1,
**characterised in that**
the filter elements (9, 10, 11) are connected with the outer wall (49) of the filter housing (2, 3) by means of a copper strand (52) bypassing an elastic sealing bead (51) and that a gas-impermeable elastic sealing bead (51) is arranged between the filter housing (2, 3) and the edge of the filter elements (9, 10, 11).

17. Dry filter in accordance with Claim 1,
**characterised in that**
the raw gas duct floor area (47') available for dust separation can be increased by 80 - 100% without enlargement of the filter housing (2, 3) and at the same time the air speed can be reduced by 40 - 50%.

18. Dry filter in accordance with Claim 12,
**characterised in that**
a funnel-shaped hopper (56) is formed between the discharge unit (12) and the bottom (47) of the raw gas duct (5) or the lower edge of the filter elements (9, 10, 11).

19. Dry filter in accordance with Claim 1,
**characterised in that**
two filter housings (2, 3) with a hopper (56) and without a partition wall are joined next to each other into a construction unit (61), whereby vertical partition walls are also done without for the raw gas duct (5) and the clean gas duct (6).

## Revendications

1. Filtre sec (1) destiné à séparer la poussière et autres substances volatiles provenant de gaz d'échappement industriels et d'atmosphères contenant de la poussière de constructions minières et de tunnels, avec un boîtier de filtre (2, 3) muni d'éléments filtrants (9, 10, 11) et un conduit de gaz brut (5) dédié, séparé d'un conduit de gaz pur (6) par une cloison de séparation (8), sachant que les éléments filtrants (9, 10, 11) doivent être alimentés par le conduit de gaz brut (5) et, en ce qui concerne le guidage de l'atmosphère, sont reliés au conduit d'alimentation latéral (6') du conduit de gaz pur (6), le boîtier de filtre (2, 3) étant équipé d'un organe d'évacuation (12) pour la poussière séparé et d'un ventilateur (50) pour le transport de l'atmosphère,
**caractérisé par le fait**
**que** le conduit de gaz brut (5) et le conduit de gaz pur (6) sont disposés à l'horizontale l'un au-dessus de l'autre dans le boîtier de filtre (2, 3) et sont séparés l'un de l'autre par la cloison de séparation (8) parcourant la ligne horizontale complète du boîtier de filtre (15), sachant que la cloison de séparation (8) mène en biais depuis l'entrée du gaz brut (21) jusqu'au toit (23) du boîtier de filtre (2, 3), et que les éléments filtrants (9, 10, 11) sont reliés à la cloison de séparation (8) et/ou la construction de cadre (17) du boîtier de filtre (2, 3).

2. Filtre sec selon la revendication 1,
**caractérisé par le fait**
**que** le conduit de gaz brut (5) est attribué à un premier boîtier de filtre (2) et que le conduit de gaz pur (6) est attribué à un deuxième boîtier de filtre (3), les deux étant reliés l'un à l'autre par le cadre latéral libre (19, 20) de la construction de cadre (17).

3. Filtre sec selon la revendication 1,
**caractérisé par le fait**
**que** le premier et le deuxième boîtier de filtre (2, 3) sont composés de plusieurs boîtiers partiels (25, 26, 27, 28) devant être reliés ensemble et/ou avec la construction de cadre (17) du boîtier de filtre (2, 3).

4. Filtre sec selon la revendication 2,
**caractérisé par le fait**
**que** des cadres latéraux (19, 19'), qui présentent des trous de vis (30) correspondant aux trous de vis (31) du cadre latéral (20) du deuxième boîtier de filtre (3), sont attribués des deux côtés au premier boîtier de filtre (2).

5. Filtre sec selon la revendication 3,
**caractérisé par le fait**
**que** l'entrée du gaz brut (21) et la sortie du gaz pur (22) sont simultanément constituées en tant que composants formés de manière à pouvoir être reliés en tant que plaques finales (33, 34) avec le premier et/ou le deuxième boîtier de filtre (2, 3).

6. Filtre sec selon la revendication 3,
**caractérisé par le fait**
**que** les boîtiers partiels (25, 26, 27, 28) peuvent être insérés latéralement dans le boîtier de filtre (2, 3) et sont conçus de manière à y être fixés.

7. Filtre sec selon la revendication 3,
**caractérisé par le fait**
**que** la cloison de séparation (8), après insertion des boîtiers partiels (25, 26, 27, 28) dans la construction de cadre (17) du boîtier de filtre (2, 3), est conçue pour y être insérée et fixée.

8. Filtre sec selon la revendication 7,
**caractérisé par le fait**
**que** la cloison de séparation (8) consiste en pièces partielles attribuées aux différents boîtiers partiels (25, 26, 27, 28), qui sont conçues pour pouvoir être réglées par torsion et/ou en hauteur.

9. Filtre sec selon la revendication 3,
**caractérisé par le fait**
**que** la construction de cadre (17) du premier et du deuxième boîtier de filtre (2, 3) est conçue de manière à permettre un accouplement simple des plaques finales (33, 34) avec l'entrée du gaz brut (21) ou la sortie du gaz pur (22) ainsi que des boîtiers partiels (25, 26, 27, 28).

10. Filtre sec selon la revendication 3,
**caractérisé par le fait**
**que** la construction de cadre (17) du premier et du deuxième boîtier de filtre (2, 3) est conçue de façon à pouvoir être combinée avec le troisième et le quatrième boîtier de filtre.

11. Filtre sec selon la revendication 2,
**caractérisé par le fait**
**que** le conduit de gaz brut (5) à l'entrée du gaz brut (21) présente un entonnoir de protection (38) qui présente une forme d'entonnoir dans le sens de l'écoulement du gaz brut.

12. Filtre sec selon la revendication 1,
**caractérisé par le fait**
**que** l'organe d'évacuation (12) présente une inversion (39) avec axe d'enfichage (40), qui est amorti dans un coulisseau (41) par un palier en graphite.

13. Filtre sec selon la revendication 12,
**caractérisé par le fait**
**que** l'organe d'évacuation (12) est conçu sous la forme d'un transporteur à raclettes (42) dont les entraîneurs entrent brièvement en contact avec un racleur (44) attribué au cadre supérieur (43) de l'inversion (39).

14. Filtre sec selon la revendication 13,
**caractérisé par le fait**
**que** l'inversion (39) est attribuée à un serre-flan (45) conçu sous la forme d'un rouleau (46).

15. Filtre sec selon la revendication 1,
**caractérisé par le fait**
**que** le **conduit de gaz brut** (5) présente un fond (47) en plaques de rideau lumineux (48).

16. Filtre sec selon la revendication 1,
**caractérisé par le fait**
**que** les éléments filtrants (9, 10, 11) sont connectés, en contournant un bourrelet d'étanchéité élastique (51), au moyen d'un fil de cuivre (52) avec la paroi extérieure (49) du boîtier de filtre (2, 3) et qu'un bourrelet d'étanchéité élastique (51) imperméable au gaz est disposé entre le boîtier de filtre (2, 3) et le bord des éléments filtrants (9, 10, 11).

17. Filtre sec selon la revendication 1,
**caractérisé par le fait**
**que** la surface du fond du conduit du gaz brut dont on dispose pour séparer la poussière (47') peut être rehaussée de 80 à 100 % sans agrandissement du boîtier de filtre (2, 3), la vitesse de l'atmosphère pouvant être simultanément réduite de 40 à 50 %.

18. Filtre sec selon la revendication 12,
**caractérisé par le fait**
**qu'**une trémie en forme d'entonnoir (56) est formée entre l'organe d'évacuation (12) et le fond (47) du conduit du gaz brut (5) ou le bord inférieur des éléments filtrants (9, 10, 11).

19. Filtre sec selon la revendication 1,
**caractérisé par le fait**
**que** deux boîtiers de filtre (2, 3) avec trémie (56) et sans paroi intermédiaire sont assemblés tenus l'un à côté de l'autre de manière à former une unité de construction (61), sachant qu'il a aussi été renoncé aux parois intermédiaires verticales pour le conduit de gaz brut (5) et le conduit de gaz pur (6).
